# EUROPÄISCHE PATENTANMELDUNG

(11) **EP 2 149 497 A2**
(43) Veröffentlichungstag der Anmeldung: **03.02.2010**
(21) Anmeldenummer: 09009320.4
(22) Anmeldetag: 17.07.2009
(51) Int. Cl.: B64D 17/38

(54) **Lastentrennschloss**

(30) Priorität: 01.08.2008 DE 102008035999
(71) Anmelder: EADS Deutschland GmbH, 85521 Ottobrunn (DE)
(72) Erfinder: Obkircher, Bernt, 88263 Horgenzell (DE); Weimer, Peter, 88677 Markdorf (DE)
(74) Vertreter: Meel, Thomas

(57) **Zusammenfassung**

Die Erfindung betrifft ein Lastentrennschloss mit einer Verriegelungseinrichtung (35,36,37), die durch eine Sicherungseinrichtung (40,41) gegen ein Entriegeln gesichert ist, solange die Zuglast einen vordefinierten minimalen Wert nicht unterschreitet, und die selbständig entriegelt, sobald die Zuglast den vordefinierten Minimalwert unterschreitet. Erfindungsgemäß ist für die Verriegelungseinrichtung (35,36,37) eine zweite Sicherungseinrichtung vorhanden, welche ein fluidgefülltes Gehäuse (10) aufweist, in dem ein mit der Zuglast beaufschlagter Kolben (20) geführt wird, der eine Bohrung (22) als Fließkanal für das Fluid aufweist, so dass ein Austausch des Fluids zwischen den beiden Gehäuseteilräumen (15,16) beiderseits des Kolbens (20) ermöglicht wird, wobei der Kolben (20) mit einem Aktivierungsschieber (25) verbunden ist, der die Verriegelungseinrichtung (35,36.37) erst freigibt, sobald der Kolben (20) einen vorbestimmten Weg zurückgelegt hat.

## Beschreibung

Die Erfindung betrifft ein Lastentrennschloss nach dem Oberbegriff des Anspruch 1.

Lastentrennschlösser haben generell den Zweck, eine Last von einer Leine zu trennen, wenn der Zug auf der Leine einen bestimmten Wert unterschreitet. Anwendungsgebiete liegen insbesondere im Bereich der Fallschirme oder Gleitschirme. Lastentrennschlösser werden dort eingesetzt, um die Last unmittelbar nach der Landung vom Schirm zu trennen, damit die Last nicht vom Fallschirm aufgrund Seitenwind über den Boden geschleppt und dadurch beschädigt werden kann.

Bekannt sind Lastentrennschlösser verschiedenster Bauart z.B. DE-OS 25 03 936 oder EP 1 619 975 B1 und US-A 3,028,187. Allen diesen Lastentrennschlössern ist gemeinsam, dass sie, wenn sie sich im aktivierten Zustand befinden, sofort nach Unterschreitung einer definierten Grenzlast auslösen.

Moderne Fallschirmsysteme stellen jedoch wegen der Dehnfähigkeit ihrer Leinen ein schwingungsfähiges System dar, wodurch die Last nach dem Öffnungsstoß des Fallschirms einige Male unter dem Schirm hoch und runter schwingt. Am oberen Umkehrpunkt dieser Schwingung ist der Zug auf die Leine klein und kann in einzelnen Fällen kurzfristig sogar ganz verschwinden. Ein Lastentrennschloss herkömmlicher Bauweise würde in einem solchen Fall sofort auslösen, und die Last würde aus der Höhe, bei der sich der Fallschirm entfaltet hat, also aus größerer Höhe, zu Boden stürzen.

Der Erfindung liegt die Aufgabe zugrunde, ein Lastentrennschloss zu schaffen, dass gegen unbeabsichtigtes Öffnen im Zuge des Öffnungsstoßes des Schirms gesichert ist.

Diese Aufgabe wird mit dem Gegenstand des Patentanspruch 1 gelöst. Eine vorteilhafte Ausführung der Erfindung ist Gegenstand eines Unteranspruchs.

Bei dem erfindungsgemäßen Lastentrennschloss wird neben einer ersten Sicherungseinrichtung, die die Verriegelungseinrichtung des Lastentrennschlosses gegen ein Entriegeln sichert, solange die Zuglast einen vordefinierten Grenzwert nicht unterschreitet, eine weitere Sicherungseinrichtung eingeführt, die ein Entriegeln der Verriegelungseinrichtung erst nach Ablauf einer definierten und einstellbaren Verzögerungszeit ermöglicht.

Das erfindungsgemäße Lastentrennschloss reagiert auf Zugentlastung erst nach dieser Verzögerungszeit. Sollte in dieser Zeit, z.B. im Zuge des Öffnungsstoßes, eine Unterschreitung der Grenzlast erfolgen, ist ein Entriegeln ausgeschlossen.

Diese Verzögerungszeit wird realisiert durch ein fluidgefülltes Gehäuse, in dem ein mit der Zuglast beaufschlagter Kolben geführt wird. Der Kolben weist eine Bohrung als Fließkanal für das Fluid auf, so dass ein Austausch des Fluids für die beiden Gehäuseteilräume beiderseits des Kolbens ermöglicht wird. Der Kolben wiederum ist mit einem Schieber verbunden, der die Verriegelungseinrichtung erst freigibt, sobald der Kolben innerhalb des Gehäuses einen vorbestimmten Weg zurückgelegt hat. Ein Entriegeln der Verriegelungseinrichtung ist somit erst möglich, nach dem das Lastentrennschloss bereits eine gewisse Zeit unter Last gestanden hat.

Die Erfindung wird anhand eines Ausführungsbeispiels unter Bezugnahme auf eine Figur beschrieben. Sie zeigt ein erfindungsgemäßes Lastentrennschloss in einem axialen Querschnitt.

Das gezeigte Lastentrennschloss befindet sich im nicht aktivierten und unbelasteten Zustand, also z.B. im Zustand vor einem Einsatz.

Es umfasst ein Schiebergehäuse 10 und ein Klinkengehäuse 30. Am oberen Leinenanschlusskörper 1 ist der Anschluss für die Fallschirmleine vorgesehen. Am unteren Leinenanschlusskörper 2 ist der Anschluss für die Lastleine vorgesehen.

Im Klinkengehäuse 30 befinden sich zwei Verriegelungsklinken 35, über die die beiden Gehäuse 10,30 mechanisch fest miteinander verbunden sind. Zwei Entriegelungsfedern 37 wirken auf die Verriegelungsklinken 35, um sie nach innen zu drücken, was zu einer Entriegelung der Verriegelungsklinken 35 führen würde. Ebenfalls innerhalb des Klinkengehäuses 30 befinden sich mehrere Lastfedern 38, die einen axial beweglichen Auslöseschieber 40 entgegen der Last nach oben drücken. Der Auslöseschieber 40 ist fest mit dem Leinenanschlusskörper 2 für den Anschluss der Lastleine verbunden. Durch die Vorsprünge 36,41 an Verriegelungsklinke 35 und Auslöseschieber 40 wird sichergestellt, dass der Auslöseschieber 40 eine Bewegung der Verriegelungsklinken 35 entweder zulässt (wie in der Fig. gezeichnet - die Zuglast an der Lastleine liegt unter dem vordefinierten Grenzwert, dadurch befinden sich die Vorsprünge 36,41 versetzt zueinander) oder blockiert (die Last an der Lastleine liegt über dem vordefinierten Grenzwert und die beiden Vorsprünge 36,41 befinden sich auf gleicher Höhe).

Im Schiebergehäuse 10 befindet sich ein Kolben 20 mit daran befestigten, axial beweglichen Aktivierungsschieber 25. Auf der anderen Seite des Kolbens 20 ist letzterer mit einer Stange 23 verbunden, die mit dem Leinenanschlusskörper 1 für den Anschluss der Fallschirmleine verbunden ist. Der Kolben 20 teilt das Schiebergehäuse 10 in zwei Teilräume 15,16, die beide mit einer inkompressiblen Flüssigkeit, z.B. Dampfungsöl, gefüllt sind. Im Kolben 20 ist eine dünne Bohrung 22 vorhanden, durch die die Flüssigkeit von einem zum anderen Teilraum innerhalb des Gehäuses 10 strömen kann. Durch den Offnungsstoß des Fallschirms und danach durch das Gewicht der Last wird der Kolben 20 nach oben gedrückt. Neben diesen Zugkräften bestimmen Größe des Schiebergehäuses 10, Durchmesser der Bohrung 22 und Viskosität der Flüssigkeit die Zeit, die nach Auftreten des Öffnungsstoßes vergeht, bis der mit dem Kolben 20 verbundene Aktivierungsschieber 25 die Verriegelungsklinken 35 an Position B freigibt. In dem gezeigten Zustand befindet sich der Kolben 20 an seiner Ausgangsstellung unmittelbar an der Abschlussplatte 11 des Schiebergehäuses 10, so dass die Verriegelungsklinken 35 blockiert sind.

Eine Sicherungsfeder 12 zwischen der Abschlussplatte 11 des Schiebergehäuses 10 und dem Aktivierungsschieber 25 sorgt dafür, dass der Aktivierungsschieber 25 in dem abgebildeten Zustand bleibt oder in ihn zurückkehrt, wenn beim Hantieren und Verpacken des Fallschirms Zug auf die Leine auftritt.

Das Lastentrennschloss ist aktiviert, wenn der Aktivierungsschieber 25 aufgrund der unter Last erfolgten Bewegung des Kolbens 20 die Verriegelungsklinken 35 nicht mehr blockiert. Ein Entriegeln der Verriegelungsklinken 35 und somit ein Abtrennen der Last ist im aktivierten Zustand des Lastentrennschlosses so lange nicht möglich, als die Last am Fallschirm den Auslöseschieber gegen die Kraft der Lastfedern 38 nach unten zieht und somit die Verriegelungsklinken 35 an der Stelle A so blockiert, dass die Klinken 35 im verriegelten Zustand verbleiben müssen.

Erst wenn bei der Landung die Zugkraft an der Leine eine Grenze unterschreitet, die es den Lastfedern 38 ermöglicht, den Auslöseschieber 40 im Klinkengehäuse 30 nach oben zu drücken, sind die Verriegelungsklinken 35 sowohl an Position B als auch an Position A frei. Sie schwenken unter der Kraft der Entriegelungsfedern 37 nach innen, trennen das Schiebegehäuse 10 von dem Klinkengehäuse 30 und geben die Last frei.

Durch die Wahl von Größe und Volumen des Schiebergehäuses 10, Durchmesser der Bohrung 22 und Viskosität der Flüssigkeit kann die gewünschte Verzögerungszeit beliebig eingestellt werden. Ebenso ist durch die Kraft der Lastfedern 38 diejenige Kraft frei wählbar, unterhalb der das Lastentrennschloss auslöst.

Ein Entdrallungslager 50 auf der Innenseite des oberen, zylinderförmigen Leinenanschlusskörpers 1 sorgt dafür, dass Fallschirmleine und Lastleine sich nicht gegeneinander verdrillen können.

Das Lastentrennschloss kann wieder zusammengesetzt werden, indem man den Aktivierungsschieber 25 gegen die Kraft der Sicherungsfeder 12 nach oben schiebt und in diesem Zustand auf das Klinkengehäuse 30 aufsetzt und solange zusammendrückt, bis der nach unten wandernde Aktivierungsschieber 25 die Verriegelungsklinken 35 in den verriegelten Zustand nach außen gedrückt hat. Der Aktivierungsschieber ist - bezogen auf seine Bewegungsrichtung - angeschrägt, um dieses fortschreitende Außeinanderdrücken der Klinken 35 zu erleichtern.

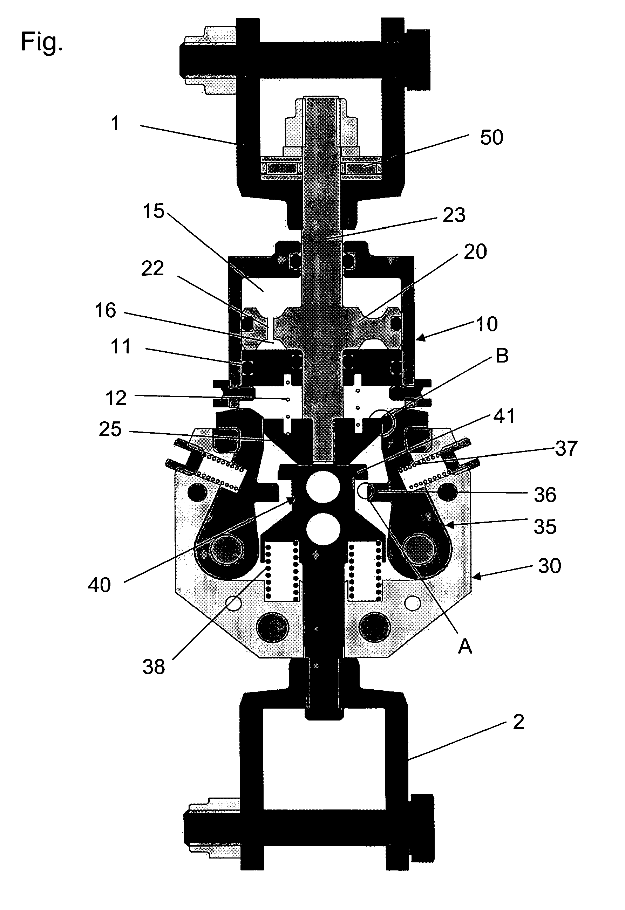

## Patentansprüche

1. Lastentrennschloss mit einer Verriegelungseinrichtung (35,36,37), die durch eine Sicherungseinrichtung (40,41) gegen ein Entriegeln gesichert ist, solange die Zuglast einen vordefinierten minimalen Wert nicht unterschreitet, und die selbständig entriegelt, sobald die Zuglast den vordefinierten Minimalwert unterschreitet, **dadurch gekennzeichnet, dass** für die Verriegelungseinrichtung (35,36,37) eine zweite Sicherungseinrichtung vorhanden ist, welche ein fluidgefülltes Gehäuse (10) aufweist, in dem ein mit der Zuglast beaufschlagter Kolben (20) geführt wird, der eine Bohrung (22) als Fließkanal für das Fluid aufweist, so dass ein Austausch des Fluids zwischen den beiden Gehäuseteilräumen (15,16) beiderseits des Kolbens (20) ermöglicht wird, wobei der Kolben (20) mit einem Aktivierungsschieber (25) verbunden ist, der die Verriegelungseinrichtung (35,36.37) erst freigibt, sobald der Kolben (20) einen vorbestimmten Weg zurückgelegt hat.

2. Lastentrennschloss nach Anspruch 1, **dadurch gekennzeichnet, dass** zwischen einer Abschlussplatte (11) des Gehäuses (10) und dem Schieber (25) eine Sicherungsfeder (12) vorhanden ist.

3. Lastentrennschloss nach Anspruch 1 oder 2, **dadurch gekennzeichnet, dass** es mehrere Leinenanschlusskörper (1,2) zum Anschluss einer Fallschirmleine sowie einer Lastleine aufweist, wobei zumindest einer der Leinenanschlusskörper (1,2) ein Entdrallungslager (50) aufweist.
